Europäisches Patentamt

European Patent Office

Office européen des brevets

(19)

(11) Veröffentlichungsnummer : **0 122 425 B1**

(12) **EUROPÄISCHE PATENTSCHRIFT**

(45) Veröffentlichungstag der Patentschrift :
28.05.86

(21) Anmeldenummer : 84102379.9

(22) Anmeldetag : 06.03.84

(51) Int. Cl.⁴ : **C 25 D 13/06, C 08 G 18/54**

(54) **Verfahren zur Herstellung von selbstvernetzenden, kathodisch abscheidbaren ETL-Bindemitteln auf Basis modifizierter Phenol-Novolake.**

(30) Priorität : 21.03.83 AT 975/83

(43) Veröffentlichungstag der Anmeldung :
24.10.84 Patentblatt 84/43

(45) Bekanntmachung des Hinweises auf die Patenterteilung : 28.05.86 Patentblatt 86/22

(84) Benannte Vertragsstaaten :
BE CH DE FR GB IT LI NL SE

(56) Entgegenhaltungen :
DE-A- 2 759 428
GB-A- 2 017 126

(73) Patentinhaber : Vianova Kunstharz Aktiengesellschaft

A-8402 Werndorf (AT)

(72) Erfinder : Daimer, Wolfgang, Dipl. Ing.
Rosenberggürtel 37/V/16
A-8010 Graz (AT)
Erfinder : Gmoser, Johann
Radegunderstrasse ·30 L/II/9
A-8045 Graz (AT)
Erfinder : Schipfer, Rudolf, Dr.
Ernst Haeckelstrasse 53
A-8010 Graz (AT)

(74) Vertreter : Pitter, Robert, Dr. et al
Postfach 191 Leechgasse 21
A-8011 Graz (AT)

## Beschreibung

Die vorliegende Erfindung betrifft ein Verfahren zur Herstellung von kathodisch abscheidbaren, selbstvernetzenden Bindemitteln für die Elektrotauchlackierung (K-ETL) auf der Basis von Phenol-Novolaken.

Aus der Literatur sind eine große Anzahl von K-ETL-Bindemitteln bekannt, wobei eine Vielzahl von Rohstoffen und Herstellungsverfahren beschrieben werden (siehe beispielsweise « Advances in Electropainting 1978-1980 » der R.H. CHANDLER LTD, März 1981).

In der Praxis hat es sich gezeigt, daß für die Erzielung von korrosionsfesten Grundierungen nur eine relativ kleine Gruppe von Rohstoffen eingesetzt wird, wobei in erster Linie die sogenannten Epoxidharze, d. h. die Di- oder Polyglycidyläther von Bisphenolen oder Phenolnovolaken zu nennen sind.

Obwohl man auf Basis der Bisphenolglycidylätherharze kationische Bindemittel bzw. gehärtete Überzüge erhält, deren Eigenschaften den Anforderungen der Technik weitgehend entsprechen, ist es doch ein bekannter Nachteil, daß Produkte auf dieser Basis ohne entsprechende Plastifizierung nur eine mangelhafte Verformungselastizität zeigen. Das äußert sich besonders nachteilig in einer unzureichenden Steinschlagbeständigkeit, wie sie insbesondere von der Kraftfahrzeuglackierung gefordert wird.

Der vorliegenden Erfindung liegt die Aufgabe zugrunde, selbstvernetzende, kationische Bindemittel mit einer praxisgerechten Eigenschaftskombination zugänglich zu machen.

Überraschenderweise gelingt die Lösung dieser Aufgabe durch Verwendung von modifizierten Phenol-Novolaken, deren phenolische Hydroxylgruppen partiell oder vollständig veräthert sind, als Grundkörper beim Aufbau der kationischen Harze. Durch diese Rohstoffbasis ist eine wesentliche Erweiterung der Möglichkeiten zur internen Plastifizierung der Bindemittel gegeben, wodurch die Elastizität der Filme wesentlich verbessert werden kann.

Bereits bekannte K-ETL-Bindemittel auf Basis von Phenol-Formaldehyd-Kondensaten wie beispielsweise solche mit MANNICH-Basenstruktur konnten nicht die z. B. von der Automobilindustrie für die Grundierung von Karossen geforderten Korrosionsschutzwerte erbringen. Diese Produkte emittieren außerdem während des Härtungsvorganges relativ große Mengen schädlicher Spaltprodukte.

Aus der AT-PS-280 605 sind höhermolekulare Phenolresoläther bekannt, welche gegebenenfalls auch kationischen Charakter aufweisen können, wenn als Verätherungsmittel ein Aminogruppen tragendes Polyol, z. B. Diäthanolamin eingesetzt wird.

Die vorliegende Erfindung betrifft demgemäß ein Verfahren zur Herstellung von kathodisch abscheidbaren, selbstvernetzenden Bindemitteln für die Elektrotauchlackierung auf der Basis von modifizierten Phenol-Novolaken, welches dadurch gekennzeichnet ist, daß man einen durch Eigenkondensation und/oder vollständige oder anteilige Verätherung der phenolischen Hydroxylgruppen modifizierten, durch sauer katalysierte Reaktion erhaltenen Phenol-Novolak aus Alkylphenolen, und gegebenenfalls Phenol, und Formaldehyd, welcher ein Molekulargewicht von mindestens 500 und eine Hydroxylzahl zwischen 100 und 700 mg KOH/g aufweist (Komponente A) gleichzeitig oder in getrennten Reaktionsstufen mit (B) Aminen, welche neben einer tertiären Aminogruppe mindestens eine Hydroxylgruppe und/oder primäre oder sekundäre Aminogruppe aufweisen und (C) aromatischen und/oder aliphatischen und/oder cycloaliphatischen Di- oder Polyisocyanaten reagiert, wobei die Mengenverhältnisse so gewählt werden, daß pro Mol Komponente (B) 2 bis 4 NCO-Äquivalente der Komponente (C) zum Einsatz kommen und das isocyanatgruppenfreie Reaktionsprodukt eine Aminzahl zwischen 40 und 120 mg KOH/g aufweist.

Durch das erfindungsgemäße Verfahren werden Bindemittel erhalten, die frei sind von verseifbaren Estergruppen und deshalb in wäßriger Verdünnung eine überlegene Stabilität aufweisen. Durch die Abspaltung eines Teiles des Amins bei der Vernetzung wird überdies die Zahl der chemisch angreifbaren Stellen wesentlich vermindert.

Als Komponente (A) werden modifizierte Phenol-Novolake eingesetzt, welche ein durchschnittliches Molekulargewicht von mindestens 500 und eine Hydroxylzahl von 100 bis 700 mg KOH/g aufweisen. Die angegebene Hydroxylzahl umfaßt sowohl alkoholische als auch phenolische Hydroxylgruppen. Die Novolake sind im wesentlichen aus Alkylphenolen aufgebaut, können aber auch gegebenenfalls Phenol enthalten.

Als Alkylphenole werden im weiteren die ortho-, meta- und para-Substitutionsprodukte des Phenols mit geradkettigen oder verzweigten Alkylresten verstanden. Vertreter dieser Verbindungsklasse sind die isomeren Kresole, Xylenole, Butyl-, Amyl-, Octyl- oder Nonylphenole bzw. die Gemische dieser Isomeren. Für das erfindungsgemäße Verfahren werden die ortho- und para-Substitutionsprodukte bevorzugt. Besonders bevorzugt werden die Alkylphenole, deren Alkylrest 4 bis 10 C-Atome aufweist, wie p. tert. Butylphenol, Amylphenol, Octyl- oder Nonylphenol.

Die Anlagerung von Formaldehyd an das Alkylphenol verläuft im Sinne einer Novolakbildung unter sauren Reaktionsbedingungen. Die Verfahren und Reaktionsmechanismen für die Herstellung dieser Kondensate sind dem Fachmann bekannt und bedürfen keiner näheren Erläuterung. Wesentlich für das erfindungsgemäße Verfahren ist die Abwesenheit von Salzresten bzw. Wasser in der Komponente (A). Das Verhältnis von Formaldehyd zu Alkylphenol ist im allgemeinen nicht kritisch und hängt wesentlich vom gewünschten Molekulargewicht des Kondensates ab. Bevorzugt werden pro besetzungsfähiger Position 0,2-1,2 Mol Formaldehyd eingesetzt.

Zur Modifizierung der Novolake werden die phenolischen Hydroxylgruppen ganz oder anteilig veräthert. Diese Reaktion erfolgt in einfachster Weise durch Umsetzung mit Monoepoxidverbindungen in Gegenwart von geeigneten Katalysatoren, wie Alkalien oder $BF_3$-Komplexen. Die Verätherung kann in bekannter Weise auch mit Benzylchlorid, Dichlordiäthyläther oder Allylchlorid erfolgen. Bevorzugt werden jedoch Monoepoxidverbindungen, wie Äthylenoxid, Propylenoxid, Styroloxid, 2,3-Epoxypropanol-1 oder Glycidyläther oder -ester eingesetzt. Besonders bevorzugte Epoxidverbindungen sind die Glycidylester von KOCH-Säuren, insbesonders solchen mit 9-11 C-Atomen.

In gleicher Weise kann die Verätherung der phenolischen Hydroxylgruppe durch Umsetzung mit Dioxolon-2 (Ethylencarbonat) bzw. 4-Methyldioxolon-2 (Propylencarbonat) bei Normaldruck unter Abspaltung von Kohlendioxid erreicht werden.

Als Komponente (B) werden (cyclo)-aliphatische Amine eingesetzt, welche, neben einer tertiären Aminogruppe, mindestens eine Hydroxylgruppe und/oder primäre oder sekunsäre Aminogruppe aufweisen. Beispiele für geeignete Verbindungen sind N,N-Dimethylaminoäthanol ; N,N-Diäthylaminoäthanol ; 2-Dimethylamino-2-methyl-1-propanol ; N,N-Diäthylpropan-1,3-diamin ; N,N-2,2-Tetramethylpropan-1,3-diamin ; 3-Dimethylamino-2,2-dimethylpropan-1-ol ; Cyclohexyldiäthanolamin ; Methyldiäthanolamin ; 2-(2-Hydroxyäthoxy)-äthylamin-1 ; 4-(2-Hydroxyäthyl)morpholin.

Als Komponente (C) sind aromatische, cycloaliphatische oder aliphatische Diisocyanate und Polyisocyanate geeignet. Als Beispiele dienen : 1,6-Diisocyanatohexan ; 1-Isocyanato-3-isocyanato-methyl (3,5,5-trimethyl)-cyclohexan (=Isophorondiisocyanat) ; 2,4-Diisocyanatotoluol ; 2,6-Diisocyanatotoluol ; 4,4'-Diisocyanatodiphenylmethan = MDI ; bzw. die entsprechenden 2,4'- und 2.2'-Isomeren. Bevorzugt werden diejenigen Diisocyanate, deren NCO-Gruppen eine unterschiedliche Reaktivität aufweisen, z. B. Toluylendiisocyanat (als handelsübliches Isomerengemisch), Cyclohexylendiisocyanat oder Isophorondiisocyanat.

Die Reaktion zwischen den Partnern (A), (B) und (C) wird vorzugsweise so durchgeführt, daß (A) und (B) gegebenenfalls in Anwesenheit eines inerten Lösungsmittels gemischt und (C) langsam unter Rühren zugegeben wird. Es ist aber auch möglich, aus (B) und (C) bei Raumtemperatur unter Kühlung ein basisches Zwischenprodukt mit freien Isocyanatgruppen herzustellen und dieses anschließend bei mäßig erhöhter Temperatur mit (A) unter Verbrauch sämtlicher Isocyanatgruppen umzusetzen. Es ist weniger bevorzugt, (A) und (C) vorzumischen und anschließend (B) zuzugeben.

Die Mengenverhältnisse der Reaktionspartner werden so abgestimmt, daß das Reaktionsprodukt — bezogen auf nichtflüchtige Harzbestandteile — eine Aminzahl nach DIN-53 157 von 40-120 mg KOH/g hat. Pro Mol eingesetzter Komponente (B) werden 2-4 Mol Isocyanatgruppen in (C) angewendet. Ein allfälliger Isocyanatüberschuß dient einer Verknüpfung der Monomeren über isocyanatreaktive Gruppen der Komponente (A). Menge und Aufbau der eingesetzten Komponente (A) wird so gewählt, daß eine sichere Bindung bzw. Verkappung aller Isocyanatgruppen, welche nicht zur Koppelung der Aminkomponente verbraucht werden, gewährleistet ist.

Die Anwesenheit eines inerten Lösungsmittels, wie z. B. Xylol oder Methylisobutylketon während der Umsetzung ist bevorzugt. Nach Abschluß der Reaktion ist eine destillative Entfernung dieses Lösungsmittels im Vakuum günstig. Es können anschließend alkoholische Lösungsmittel wie Äthanol, (Iso)-propanol oder Glykoläther wie Äthylenglykolmonoäthyläther oder Äthylenglykolmonobutyläther zur Senkung der Viskosität bis zu einem Feststoffgehalt von 50-90 % zugegeben werden.

Die weitere Verarbeitung des erfindungsgemäßen Bindemittels, wie Neutralisation mit Ameisensäure, Essigsäure oder Milchsäure, der Zusatz von Katalysatoren und Inhibitoren, die Pigmentierung sowie die Verdünnung mit Wasser zu einem kationischen Elektrotauchlackierbad erfolgt in bekannter Weise. Ebenso sind die Bedingungen für die Abscheidung und Aushärtung der Lackfilme bekannt. Die Einbrenntemperaturen für die erfindungsgemäß hergestellten Produkte liegen zwischen 150 und 200 °C, vorzugsweise bei 160-180 °C.

Das folgende Beispiel dient zur näheren Erklärung der Erfindung und soll ihren Umfang nicht beschränken. Alle Prozent- und Mengenangaben beziehen sich, soweit nicht anders angegeben, auf Gewichtseinheiten. Alle Viskositäten sind gemäß GARDNER-HOLDT-Standard (GH) angegeben.

Beispiel 1

In 120 g Xylol werden 440 g Nonylphenol und 209 g Phenol (90 % in Wasser) sowie 7 g konzentrierte Salzsäure verrührt. Bei 80 °C werden in einer Stunde 250 g 36 %ige Formaldehydlösung zugesetzt. Das trübe Reaktionsprodukt wird bei 90 °C weitergerührt, bis der Gehalt an freiem Formaldehyd unter 0,8 % gefallen ist. Bei steigendem Vakuum werden 235 g Wasser abdestilliert, wobei das rückfließende Xylol als Schleppmittel dient. Das nunmehr klare Harz wird mit weiterem Xylol auf 67 % Festharzgehalt verdünnt.

Zu 717 g dieser Harzlösung werden 0,66 g Bortrifluoridätherat und 162 g eines Glycidylesters von verzweigten $C_9$-$C_{11}$-Monocarbonsäuren gegeben und auf 120 °C erwärmt. Nach 90 Minuten ist der Oxirangruppengehalt auf 0,03 meq/g gesunken. Die Viskosität einer Probe aus 9 g Harzlösung und 2 g Xylol beträgt M (GH).

Die so erhaltene Komponente (A) hat ein mittleres Molekulargewicht von 900 und eine Hydroxylzahl von 250 mg KOH/g. Man fügt bei 60 °C 307 g Xylol und 130 g N,N-Diäthylaminopropan-1,3-diamin zu. Während 30 Minuten wird eine Mischung aus 174 g Toluylendiisocyanat und 116 g Xylol gleichmäßig zugetropft. Das Reaktionsgemisch wird auf 80 °C erwärmt. Der Gehalt an freien Isocyanatgruppen beträgt Null, die Aminzahl des Festharzes beträgt 53 mg KOH/g. Das Harz wird bei 120 °C im Vakuum von 488 g Xylol befreit und mit 400 g Äthylenglykolmonobutyläther angelöst.

Das gelbbraune klare Produkt ist nach Neutralisation mit Ameisensäure in Wasser zu einer leicht trüben Lösung mit 10 % Harzgehalt verdünnbar.

## Patentansprüche

1. Verfahren zur Herstellung von kathodisch abscheibaren, selbstvernetzenden Bindemitteln für die Elektrotauchlackierung auf der Basis von modifizierten Phenol-Novolaken,

dadurch gekennzeichnet, daß man einen durch Eigenkondensation und/oder vollständige oder anteilige Verätherung der phenolischen Hydroxylgruppen modifizierten, durch sauer katalysierte Reaktion erhaltenen Phenol-Novolak aus Alkylphenolen und gegebenenfalls Phenol und Formaldehyd, welcher ein Molekulargewicht von mindestens 500 und eine Hydroxylzahl zwischen 100 und 700 mg KOH/g aufweist (Komponente A) gleichzeitig oder in getrennten Reaktionsstufen mit

(B) Aminen, welche neben einer tertiären Aminogruppe mindestens eine Hydroxylgruppe und/oder primäre oder sekundäre Aminogruppe aufweisen und

(C) aromatischen und/oder aliphatischen und/oder cycloaliphatischen Di- oder Polyisocyanaten umsetzt,

wobei die Mengenverhältnisse so gewählt werden, daß pro Mol Komponente (B) 2 bis 4 NCO-Äquivalente der Komponente (C) zum Einsatz kommen und das isocyanatgruppenfreie Reaktionsprodukt eine Aminzahl zwischen 40 und 120 mg KOH/g aufweist.

2. Verfahren nach Anspruch 1, dadurch gekennzeichnet, daß in der Komponente (A) ortho- und/oder para-substituierte Alkylphenole mit einem Alkylrest mit 4 bis 10 C-Atomen eingesetzt werden.

3. Verfahren nach den Ansprüchen 1 und 2, dadurch gekennzeichnet, daß die Verätherung der phenolischen Hydroxylgruppen mit Monoepoxidverbindungen erfolgt.

4. Verfahren nach Anspruch 3, dadurch gekennzeichnet, daß als Monoepoxidverbindungen zur Verätherung der phenolischen Hydroxylgruppen des Novolaks 2,3-Epoxypropanol-1 und/oder Alkylenoxide und/oder Glycidylester von Monocarbonsäuren mit 6 bis 35 C-Atomen und/oder Dioxolon-2 und/oder 4-Methyldioxolon-2 eingesetzt werden.

5. Verfahren nach den Ansprüchen 1 bis 4, dadurch gekennzeichnet, daß man die Komponenten (A) und (B) gegebenenfalls in Gegenwart eines isocyanatinerten Lösungsmittels mischt, die Komponente (C) bei 50-70 °C langsam unter Rühren zugibt und die Reaktion bei 80 °C bis zu einem Isocyanatwert von praktisch 0 führt.

6. Verfahren nach den Ansprüchen 1 bis 4, dadurch gekennzeichnet, daß man die Komponente (A) mit einem eine freie NCO-Gruppe aufweisenden Reaktionsprodukt aus den Komponenten (B) und (C), gegebenenfalls zusammen mit weiteren Anteilen der Komponente (C) reagiert.

## Claims

1. Process for producing cathodically depositable self-crosslinking binders for electrodeposition on the basis of modified phenol novolaks, characterised in that a phenol novolak modified through self-condensation and/or total or partial etherification of the phenolic hydroxy groups, obtained through acid catalysed reaction of alkyl phenols and optionally phenols and formaldehyde, having a molecular weight of at least 500 and a hydroxyl number of between 100 and 700 mg KOH/g (component A) is reacted simultaneously or in separate reaction steps with

(B) amines which carry, besides a tertiary aminogroup, at least one hydroxy group and/or primary or secondary amino group and

(C) aromatic and/or aliphatic and/or cycloaliphatic di- or polyisocyanates,

the weight ratios being chosen such that per mole of component (B) 2 to 4 NCO-equivalents of component (C) are employed and that the isocyanate group free reaction product has an amine value of between 40 and 120 mg KOH/g.

2. Process according to claim 1, characterised in that in component (A) ortho- and/or para-substituted alkyl phenols with an alkyl radical with from 4 to 10 C-atoms are employed.

3. Process according to claims 1 and 2, characterised in that the etherification of the phenolic hydroxy groups is carried out with monoepoxy compounds.

4. Process according to claim 3, characterised in that the monoepoxy compounds used for the etherification of the phenolic hydroxy groups of the novolak are 2,3-epoxypropanol-1 and/or alkylene oxides and/or glycidyl esters of monocarboxylic acids with from 6 to 35 C-atoms and/or dioxolon-2 and/or 4-methyldioxolon-2.

5. Process according to claims 1 to 4, characterised in that components (A) and (B) are mixed, optionally in the presence of an isocyanate inert solvent, component (C) is slowly added with stirring at 50-70 °C and the reaction is carried to an isocyanate value of practically 0.

6. Process according to claims 1 to 4, characterised in that component (A) is reacted with a reaction product of component (B) and (C) having one free isocyanate group, optionally together with further portions of component (C).

**Revendications**

1. Procédé de préparation de liants autoréticulants, dépositable cathodiquement pour l'application de revêtements électrophorétiques à base de phénol-novolaques modifiées,

caractérisé par le fait qu'avec une phénol-novolaque modifiée par auto-condensation et/ou éthérification complète ou partielle des groupes hydroxyle phénoliques et préparée par réaction catalysée en milieu acide à partir d'alcoylphénols et éventuellement de phénol et de formaldéhyde, laquelle phénol-novolaque présente un poids moléculaire d'au moins 500 et un indice d'hydroxyle entre 100 et 700 mg de KOH/g (composant A), on fait réagir simultanément ou en étapes réactionnelles séparées

des amines (B) qui présentent, à côté d'un groupe amino tertiaire, au moins un groupe hydroxyle et/ou un groupe amino primaire ou secondaire et

des di- ou polyisocyanates (C) aromatiques et/ou aliphatiques et/ou cycloaliphatiques,

les proportions quantitatives étant choisies de façon telle que par mole de composant (B) on met en œuvre 2 à 4 équivalents NCO- du composant (C) et que le produit de la réaction exempt de groupes isocyanates présente un indice d'amine entre 40 et 120 mg de KOH/g.

2. Procédé selon la revendication 1, caractérisé par le fait que, par le composant (A), on met èn œuvre des alcoyl-phénols ortho- et/ou para-substitués ayant un radical alcoyle de 4 à 10 atomes de C.

3. Procédé selon les revendications 1 et 2, caractérisé par le fait que l'éthérification des groupes hydroxyles phénoliques est effectuée avec des composés monoépoxydes.

4. Procédé selon la revendication 3, caractérisé par le fait qu'en tant que composés monoépoxydes pour l'éthérification des groupes hydroxyles phénoliques de la novolaque, on met en œuvre du 2,3-époxypropanol-1 et/ou des oxydes d'alcoylène et/ou des esters glycidyliques d'acides monocarboxyliques ayant de 6 à 35 atomes de C et/ou de la dioxolone-2 et/ou de la 4-méthyldioxolone-2.

5. Procédé selon les revendications 1 à 4, caractérisé par le fait que les composants (A) et (B) sont mélangés éventuellement en présence d'un solvant isocyanaté, le composant (C) étant ajouté sous agitation lentement à 50-70 °C, et que l'on conduit la réaction à 80 °C jusqu'à une valeur d'isocyanate de pratiquement 0.

6. Procédé selon les revendications 1 à 4, caractérisé par le fait que le composant (A) est mis à réagir avec un produit de réaction comportant un groupe NCO- libre obtenu à partir des composants (B) et (C), éventuellement en même temps qu'avec d'autres proportions de composant (C).